Europäisches Patentamt

European Patent Office

Office européen des brevets

(11) Veröffentlichungsnummer: **0 296 361 B1**

(12) **EUROPÄISCHE PATENTSCHRIFT**

(45) Veröffentlichungstag der Patentschrift: **04.03.92**

(21) Anmeldenummer: **88108007.1**

(22) Anmeldetag: **19.05.88**

(51) Int. Cl.⁵: **B65G 43/08**, B65G 53/24,
B65G 53/66, G06F 15/24,
B65G 63/00, B65G 43/10,
B65D 88/32

(54) Verfahren zur Steuerung einer Förder- oder Verarbeitungsanlage.

(30) Priorität: **23.06.87 DE 3720622**

(43) Veröffentlichungstag der Anmeldung:
**28.12.88 Patentblatt 88/52**

(45) Bekanntmachung des Hinweises auf die
Patenterteilung:
**04.03.92 Patentblatt 92/10**

(84) Benannte Vertragsstaaten:
**AT BE CH DE FR IT LI LU NL**

(56) Entgegenhaltungen:
**FR-A- 2 094 184**
**FR-A- 2 246 183**

(73) Patentinhaber: **HAPPLE GMBH & CO., MASCHI-
NENFABRIK
Nikolaus-Thoman-Strasse 5-7
W-7912 Weissenhorn/Bayern(DE)**

(72) Erfinder: **Happle, Karl
Ringeisenstrasse 12
W-7912 Weissenhorn(DE)**

(74) Vertreter: **von Kreisler, Alek, Dipl.-Chem. et al
Patentanwälte Von Kreisler-Selting-Werner,
Deichmannhaus am Hauptbahnhof
W-5000 Köln 1(DE)**

**Beschreibung**

Die Erfindung betrifft ein Verfahren zur Steuerung einer Förder- oder Verarbeitungsanlage nach dem Oberbegriff des Patentanspruchs 1.

Bei vernetzten Förder- oder Verarbeitungsanlagen bei denen verschiedene Aggregate durch eine Vielzahl von Förderwegen verbindbar sind, wie z.B. in Speicher- oder Siloanlagen, besteht die Schwierigkeit, einen Förderweg zu finden, auf dem der Gutstrom von einem vorgegebenen Startpunkt zu einem ebenfalls vorgegebenen Zielpunkt gelangt. Die Förderwege werden in der Regel nanuell mit Hilfe eines Plans der Anlage ermittelt und anschließend wird eine Einschaltliste erstellt, die die Befehle zum Einschalten der zur Aktivierung des Förderweges erforderlichen Aggregate und Verzweigungsstellen erstellt. Entsprechend dieser Einschaltliste erfolgt das Einschalten der Aggregate bzw. das Umschalten der Verzweigungsstellen. Der Betreiber einer Förder- oder Verarbeitungsanlage verfügt über eine Reihe von Einschaltlisten, die die Verbindungen zwischen jeweils einem Startpunkt und einem Zielpunkt enthalten. Das Erstellen dieser Einschaltlisten ist bei komplexen Anlagen äußerst aufwendig. Wenn eine Kombination aus Startpunkt und Zielpunkt ausgewählt ist, für die noch keine Einschaltliste existiert, muß diese Einschaltliste manuell erarbeitet werden.

Der Erfindung liegt die Aufgabe zugrunde ein Verfahren der im Oberbegriff des Patentanspruchs 1 angegebenen Art zu schaffen, das die Ermittlung eines Förder- oder Verarbeitungsweges zwischen einem vorgegebenen Startpunkt und einen ebenfalls vorgegebenen Zielpunkt auf schnelle und einfache Weise ermöglicht und ferner imstande ist, den gefundenen Förderweg zu aktivieren.

Die Lösung dieser Aufgabe erfolgt erfindungsgemäß mit den im kennzeichnenden Teil des Patentanspruchs 1 angegebenen Merkmalen.

Bei dem erfindungsgemäßen Verfahren sind die in der Förder- oder Verarbeitungsanlage enthaltenen Aggregate und Richtungswähler in einem Programmprocessor in einer Ablaufliste gespeichert. Die Ablaufliste enthält außerdem Informationen über die Verbindungen der genannten Komponenten untereinander, und zwar sowohl über die permanent existierenden Verbindungen als auch über diejenigen Verbindungen, die wahlweise erzeugt werden können. Bei denjenigen Verbindungen, die wahlweise erzeugt werden können, ist zu unterscheiden, zwischen solchen Verbindungen, die lediglich eine andere Förderrichtung bestimmten, und solche Verbindungen, die zu unterschiedlichen Verarbeitungsstationen führen. Die letzteren Verbindungen stellen Fragepunkte dar, bei denen das Programm dem Benutzer eine Entscheidung abverlangt. Die anderen Verbindungen, die lediglich eine Veränderung des Förderweges (ohne unterschiedliche Einwirkungen auf das Fördergut) hervorrufen, können vom Programmprocessor beliebig eingestellt werden. Der Programmprocessor simuliert unterschiedliche Stellungen der Richtungswähler und stellt fest, ob durch die jeweilige Kombination der Richtungswählerstellungen der Zielpunkt erreicht wird. Wird der Zielpunkt nicht erreicht, wird eine andere Kombination von Richtungswählerstellungen simuliert. Dies geschieht solange, bis bei irgendeinem der Probeläufe eine Kombination von Richtungswählerstellungen erreicht ist, bei denen der Zielpunkt erreicht wird. Diese Kombination von Aggregaten und Richtungswählerstellungen wird als Einschaltliste gespeichert. Bei dem nachfolgenden Betrieb der Anlage werden die Aggregate und Richtungswähler vom Programmprocessor entsprechend der Einschaltliste eingeschaltet bzw. gesteuert. Auf diese Weise ist es möglich, in einer komplexen Förder- oder Verarbeitungsanlage sehr schnell einen Förderweg von einem Startpunkt zu einem Zielpunkt zu ermitteln. Es besteht auch die Möglichkeit, in der Ablaufliste solche Aggregate und Richtungswähler zu kennzeichnen bzw. zu löschen, die defekt sind oder die für einen anderweitigen Betrieb benötigt werden und für den zu ermittelnden Förderweg nicht zur Verfügung stehen.

Bei den Aggregaten, die einzuschalten sind, handelt es sich beispielsweise um Redler (Horizontalförderer), Elevatoren, Waagen, Einlaß- oder Auslaßschieber von Behältern, Gutreinigungsmaschinen, Ventilatoren, Zerkleinerungsmaschinen, Trocknungs-, Befeuchtungs- oder Mischmaschinen. Die Richtungswähler sind Weichen, die einen ankommenden Gutstrom in mehrere wählbare Richtungen lenken können, wie Klappkästen, Drehrohrverteiler, Pneumaweichen u.dgl.. Es besteht auch die Möglichkeit, daß ein Aggregat und eine Weiche baulich miteinander vereinigt sind.

In der Ablaufliste ist gewissermaßen das Diagramm der Förder- oder Verarbeitungsanlage in Form einer Tabelle gespeichert.

Das erfindungsgemäße Verfahren ermöglicht es ferner, die Laufzeit des Gutstroms auf dem entsprechenden Förderweg sowie die im Förderweg enthaltene Gutmenge zu ermitteln und für das Abschalten des Förderweges zu berücksichtigen. Es besteht daher die Möglichkeit, nach Beendigung der Gutaufnahme am Startpunkt den Förderweg über eine berechnete Zeit noch aktiviert zu halten, bis sämtliches Fördergut zum Zielpunkt gelangt ist. Ferner kann die im Förderweg enthaltene Gutmenge bestimmt werden, um beispielsweise die Gutannahme am Startpunkt dann zu beenden, wenn die am Zielpunkt angelangte Gutmenge und die im Förderweg befindliche Gutmenge zusammengenommen einen Wert erreicht haben, der der zu transportierenden Gutmenge entspricht.

Die Erfindung eignet sich insbesondere für Förder- und Verarbeitungsanlagen, mit kontinuierlichen Gutströmen von Schüttgütern, wie beispielsweise Getreidesilos.

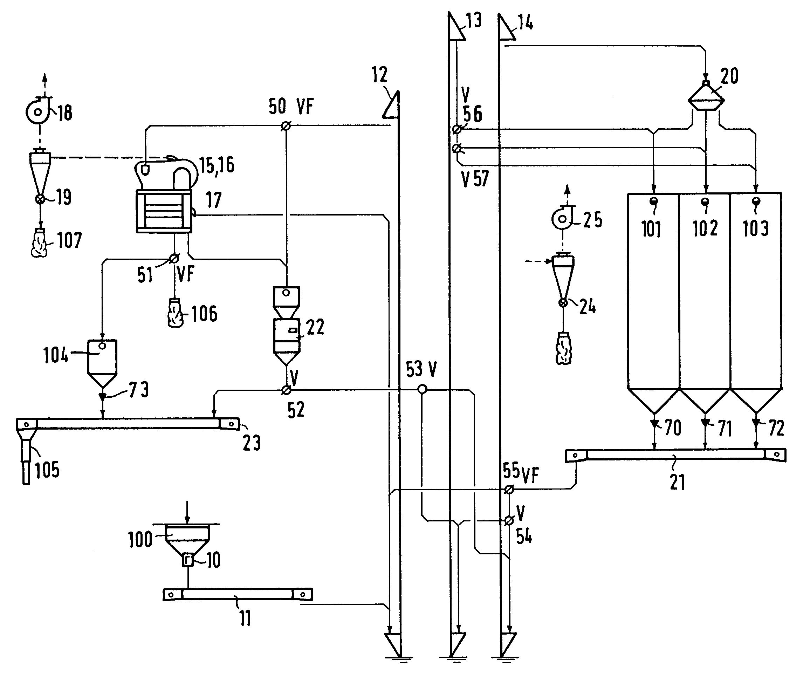

Im folgenden wird unter Bezugnahme auf die einzige Figur der Zeichnung ein Ausführungsbeispiel der Erfindung näher erläutert.

In der Zeichnung ist ein vereinfachter Plan einer Siloanlage mit den Förderstrecken, Aggregaten und Verzweigungspunkten dargestellt.

Die Siloanlage weist mehrere Silozellen 101, 102, 103 auf, deren Auslässe über Auslaufschieber 70, 71, 72 mit einem Sammelredler (Horizontalförderer) 21 verbunden sind. Der Auslaß des Sammelredlers 21 fördert zu einem Klappkasten 55, bei dem es sich um eine Verzweigungsstelle als Fragepunkt handelt. In der Zeichnung sind die Klappkästen, die reine Verzweigungsstellen darstellen, also lediglich unterschiedliche Gutstromrichtungen ermöglichen, ohne daß damit unterschiedliche Behandlungen verbunden wären, mit V bezeichnet, während diejenigen Verzweigungsstellen, die gleichzeitig Fragepunkte darstellen mit VF bezeichnet sind.

Mit 20 ist ein Drehrohrverteiler bezeichnet, dessen Einlaßleitung wahlweise mit jedem der drei Eingänge der Silozellen 101, 102, 103 verbindbar ist. Mit 17 ist ein Aspirateurantrieb einer Reinigungsmaschine bezeichnet, die einen Aspirateurventilator 15 und eine Aspirateurschnecke 16 aufweist. Der Hauptstrom des der Reinigungsmaschine zugeführten Materials verläßt die Reinigungsmaschine durch den Aspirateurantrieb 17, während ein erster Sekundärstrom einem Zyklon zugeführt werden kann, der einen Ventilator 18 und eine Austragsschleuse 19, unter der ein Sack 107 angeordnet ist, aufweist. Ein zweiter Sekundärweg führt von der Reinigungsmaschine zu einem Klappkasten 51, der den Sekundärstrom entweder dem Sack 106 oder dem Abputzbunker 104 zuführt. Der Auslaß des Abputzbunkers 104 ist mit dem zur Verladestelle 105 führenden Verladeredler 23 verbunden.

Die Gutannahmevorrichtung weist einen Annahmeredler 10 auf, von der das Gut dem Querredler 11 zugeführt wird. Dieser Querredler fördert zum Annahmeelevator 12, der das Gut dem Klappkasten 50 zuführt. Vom Klappkasten 50 gelangt der Gutstrom entweder zur Reinigungsmaschine oder zu einer Waage 22.

Die Siloelevatoren 13 und 14 verlaufen parallel zueinander und können einander ersetzen. Die Gutaufgabe zu den Siloelevatoren 13 und 14 wird von den Klappkästen 54 und 55 gesteuert und die Gutabgabe von den Siloelevatoren zu den Silozellen wird durch die Klappkästen 56 und 57 sowie den Drehrohrverteiler 20 gesteuert.

Die Elevatoren 12, 13 und 14 und die Redler sind ferner mit einem Zyklon gekoppelt, dessen Austragsschleuse 24 zu einem Sack führt, und dessen Ventilator mit 25 bezeichnet ist.

Nachstehend ist die in dem (nicht dargestellten) Programmprocessor (Rechner) vorgegebene Ablaufliste der in der Zeichnung dargestellten Anlage angegeben:

## ABLAUFLISTE

| Antr.Nr. | Befehl | Antr.Nr. | Antriebs-bezeichnung | Kommentar |
|---|---|---|---|---|
| 10. | ANNAHMEREDLER | | | |
| | ON | 11. | Querredler | |
| 11. | QUERREDLER | | | |
| | ON | 12. | Annahmeelevator | |
| 12. | ANNAHMEELEVATOR | | | |
| | ON | 50. | Klappkasten | |
| | | 24. | Austrags-schleuse Aspiration | |
| | | 25. | Ventilator Aspiration | |
| 13. | SILOELEVATOR I | | | |
| | ON | 56. | Klappkasten | |
| | | 24. | Austrags-schleuse Aspiration | |
| | | 25. | Ventilator Aspiration | |
| 14. | SILOELEVATOR II | | | |
| | ON | 20. | Drehrohrver-teiler | |
| | | 24. | Austrags-schleuse Aspiration | |
| | | 25. | Ventilator Aspiration | |

| Antr.Nr. | Befehl | Antr.Nr. | Antriebs-bezeichnung | Kommentar |
|---|---|---|---|---|
| 17. | ASPIRATEUR ANTRIEB | | | |
| | ON | 22. | Waage | |
| | TO | 51. | Klappkasten | |
| | TO | 18. | Ventilator Nachreinigung | |
| | | 15. | Aspirateur Ventilator | |
| | | 16. | Aspirateur Schnecke | |
| 18. | VENTILATOR NACHREINIGUNG | | | |
| | ON | 19. | Austrags-schleuse Ab-scheider | |
| 19. | AUSTRAGSSCHLEUSE ABSCHEIDER | | | |
| | ON | 107. | Sack Aspira-teur/Ventus | |
| 20. | DREHROHRVERTEILER | | | |
| | BIN 1 | 101. | Zelle | |
| | BIN 2 | 102. | Zelle | |
| | BIN 3 | 103. | Zelle | |
| 21. | SAMMELREDLER | | | |
| | ON | 55. | Klappkasten | |
| 22. | WAAGE | | | |
| | ON | 52. | Klappkasten | |
| 23. | VERLADEREDLER | | | |
| | ON | 105. | Verladung | |

| Antr.Nr. | Befehl | Antr.Nr. | Antriebs-bezeichnung | Kommentar |
|---|---|---|---|---|
| 50. | KLAPPKASTEN | | | FRAGE-PUNKT |
| | ON | 17. | Aspirateur Antrieb | mit Reinigung |
| | OFF | 22. | Waage | ohne Reinigung |
| 51. | KLAPPKASTEN | | | FRAGE-PUNKT |
| | ON | 104. | Abputzbunker | |
| | OFF | 106. | Sack Aspirateur | |
| 52. | KLAPPKASTEN | | | |
| | ON | 23. | Verladeredler | |
| | OFF | 53. | Klappkasten | |
| 53. | KLAPPKASTEN | | | |
| | ON | 14. | Siloelevator II | |
| | OFF | 13. | Siloelevator I | |
| 54. | KLAPPKASTEN | | | |
| | ON | 13. | Siloelevator I | |
| | OFF | 14. | Siloelevator II | |
| 55. | KLAPPKASTEN | | | FRAGE-PUNKT |
| | NACH | 105. | Verladestation | |
| | ON | 12. | Annahme-elevator | mit Reinidung, Wägung |
| | OFF | 54. | Klappkasten | Umlauf |

6

| Antr.Nr. | Befehl | Antr.Nr. | Antriebs-bezeichnung | Kommentar |
|---|---|---|---|---|
| 56. | KLAPPKASTEN | | | |
| | ON | 101. | Zelle | |
| | OFF | 57. | Klappkasten | |
| 57. | KLAPPKASTEN | | | |
| | ON | 102. | Zelle | |
| | OFF | 103. | Zelle | |
| 70. | SILOAUSLAUFSCHIEBER S101 | | | |
| | ON | 21. | Sammelredler | |
| 71. | SILOAUSLAUFSCHIEBER S102 | | | |
| | ON | 21. | Sammelredler | |
| 72. | SILOAUSLAUFSCHIEBER S103 | | | |
| | ON | 21. | Sammelredler | |
| 73. | BUNKERAUSLAUFSCHIEBER | | | |
| | ON | 23. | Vorladeredler | |
| 100. | ANNAHME | | | END-PUNKT |
| | ON | 10. | Annahmeredler | |
| 101. | ZELLE | | | END-PUNKT |
| | ON | 70. | Siloauslauf-schieber S101 | |
| 102. | ZELLE | | | END-PUNKT |
| | ON | 71. | Siloauslauf-schieber S102 | |

| Antr.Nr. | Befehl | Antr.Nr. | Antriebs-bezeichnung | Kommentar |
|---|---|---|---|---|
| 103. | ZELLE | | | END-PUNKT |
| | ON | 72. | Siloauslauf-schieber S103 | |
| 104. | BUNKER | | | END-PUNKT |
| | ON | 73. | Bunkerauslauf-schieber | |
| 105. | VERLADESTATION | | | END-PUNKT |
| 106. | SACK ASPIRATEUR | | | END-PUNKT |
| 107. | SACK ASPIRATEUR/VENTUS | | | END-PUNKT |

Die Befehle OFF und ON bezeichnen jeweils den Einschaltzustand bzw. Ausschaltzustand des zugehörigen Aggregats oder der Verzweigungsstelle. Bei den Verzweigungsstellen (Klappkästen) bezeichnet OFF diejenige Position, die die Verzweigungsstelle im aberregten Zustand, also ohne Ansteuerung, einnimmt, während ON diejenige Position bezeichnet, die die Verzweigungsstelle im erregten Zustand einnimmt. BIN/n bezeichnet einen Befehl, der einer Verzweigungsstelle zugeführt wird, die mehr als zwei Abgänge hat. n gibt die Nummer des jeweiligen Abgangs an, bei dem Drehrohrverteiler 20 also die Nummer des jeweiligen Silobehälters. TO bezeichnet Sekundärwege, die von dem Hauptweg abzweigen. Der Hauptweg wird mit ON-OFF oder BIN/n gekennzeichnet. VON bezeichnet einen möglichen Startpunkt und END einen möglichen Endpunkt eines Förderweges. Diejenigen Komponenten, bei denen in der Ablaufliste kein Befehl eingetragen ist, werden obligatorisch zusammen mit der darüberstehenden Komponente eingeschaltet.

Durch die Funktion NACH kann ein Fragepunkt übergangen werden. Wird z.B. eine Verladung von der Zelle 101 zur Verladestation NACH 105 eingegeben, weiß der Programmprocessor, daß im Falle des Ziels 105 der Klappkasten automatisch in die Stellung ON gestellt werden muß, um zu diesem Ziel zu kommen. Ist das Ziel nicht die Nummer 105, wird der Klappkasten 55 weiter als normaler Fragepunkt behandelt. Im Beispiel käme nun frühestens am Klappkasten 50 die Frage, ob mit Reinigung oder ohne Reinigung gearbeitet werden soll. Es ist prinzipiell möglich, beliebig viele Befehle "NACH"- mit der Zielnummer untereinander einzutragen. In diesem Falle wird der danach folgende Befehl (entweder ON oder OFF) ausgeführt, wenn eine der angegebenen Zielnummern das gewünschte Ziel ist.

Die Ablaufliste besteht aus einer Aneinanderreihung der Aggregate und Verzweigungsstellen, wobei für jedes Aggregat und jede Verzweigungsstelle angegeben ist, mit welchen weiteren Aggregaten oder Verzweigungsstellen der jeweilige Ausgang verbunden ist.

Ein Beispiel für die Gutstromaufteilung ist der ASPIRATEURANTRIEB 17. Der Hauptweg des Gutstroms geht zur Waage 22 während ein Sekundärweg zum Klappkasten 51 und ein anderer zum Ventilator nach Reinigung 18 führt. Beim Einschalten des Antriebs 17 werden die Antriebe 15 und 16 bedingungslos eingeschaltet.

Bei dem Klappkasten 50 handelt es sich um einen Frage-Punkt VF. Dies bedeutet, daß der Programmprocessor beim Ermitteln der gewünschten Richtung an dieser Stelle nicht selbsttätig entscheidet, sondern den Bediener fragt, ob der Betrieb mit Reinigung oder ohne Reinigung ausgeführt werden soll. Diese Kennzeichnung ist notwendig, wenn das gewünschte Ziel auf beiden Wegen erreicht werden kann, jedoch ein qualitativer Unterschied zwischen denjenigen Wegen besteht, auf denen das Ziel erreicht wird. Beim Klappkasten 53 ist dagegen die Stellung willkürlich vorgebbar. In diesem Fall nimmt der Programmproces-

8

sor bei einem Probelauf jeweils die erste der angegebenen Verzweigungen. Würde jedoch der Befehl mit der Option "Belegungszustand" eingegeben, wird der Weg über den Elevator 13 gewählt, wenn Elevator 14 schon belegt ist, oder umgekehrt.

Dem Programmprozessor wird ein Zielpunkt und ein Startpunkt eingegeben. Ausgehend vom Startpunkt stellt der Programmprozessor eine Probeliste auf, die aus einer Aneinanderreihung derjenigen Aggregate und Verzweigungsstellen besteht, die einen Förderweg bilden. Dabei werden beispielsweise zunächst alle Verzweigungsstellen V in der Stellung OFF angenommen. Führt diese Probeliste nicht zu dem eingegebenen Zielpunkt, dann wird eine weitere Probeliste aufgestellt, bei der eine der Verzweigungsstellen V in die Stellung ON gesetzt wird. Dies wird solange fortgeführt, bis eine Probeliste erstellt wurde, bei der der Förderweg zum gewünschten Zielpunkt führt. Diese Probeliste wird als Einschaltliste gespeichert.

Nachstehend ist ein Beispiel für eine vom Programmprozessor ermittelte Einschaltliste 1 eingegeben, bei der der das Produkt von der Annahme 100 zum Silobehälter 101 gefördert werden soll:

| Einschaltliste 1 von 100 nach 101 | | | |
|---|---|---|---|
| Schritt | Befehl | Antr.Nr. | Antriebsbezeichnung |
| 1 | VON | 100. | ANNAHME |
| 2 | ON | 10. | ANNAHMEREDLER |
| 3 | ON | 11. | QUERREDLER |
| 4 | | 24. | AUSTRAGSSCHLEUSE ASPIRATION |
| 5 | | 25. | VENTILATOR ASPIRATION |
| 6 | ON | 12. | ANNAHMEELEVATOR |
| 7 | ON | 50. | KLAPPKASTEN |
| 8 | | 15. | ASPIRATEUR VENTILATOR |
| 9 | | 16. | ASPIRATEUR SCHNECKE |
| 10 | ON | 17. | ASPIRATEUR ANTRIEB |
| 11 | ON | 22. | WAAGE |
| 12 | OFF | 52. | KLAPPKASTEN |
| 13 | OFF | 53. | KLAPPKASTEN |
| 14 | | 24. | AUSTRAGSSCHLEUSE ASPIRATION |
| 15 | | 25. | VENTILATOR ASPIRATION |
| 16 | ON | 13. | SILOELEVATOR I |
| 17 | ON | 56. | KLAPPKASTEN |
| 18 | END | 101. | ZELLE |
| 19 | TO | 17. | ASPIRATEUR ANTRIEB |
| 20 | ON | 18. | VENTILATOR NACHREINIGUNG |
| 21 | ON | 19. | AUSTRAGSSCHLEUSE ABSCHEIDER |
| 22 | END | 107. | SACK ASPIRATEUR/VENTUS |
| 23 | TO | 17. | ASPIRATEUR ANTRIEB |
| 24 | ON | 51. | KLAPPKASTEN |
| 25 | END | 104. | ABPUTZBUNKER |

Die Einschaltliste 1 gibt an, daß der Produktstrom von der Annahme 100 über den Annahmeredler 10 zum Querredler 11 gefördert wird. Gleichzeitig mit dem Querredler 11 werden die Austragsschleuse 24 und der Ventilator 25 eingeschaltet. Vom Querredler 11 gelangt das Gut zum Annahmeelevator 12 und von dort zum Klappkasten 50. Der Klappkasten 50 ist ein Frage-Punkt VF, bei dem der Benutzer in Schritt 7 den Befehl ON eingegeben hat, um zu veranlassen, daß die Förderung in die Silozelle 101 "mit Reinigung" erfolgt.

Kommt der Programmprozessor an eine Verzweigung mit Sekundärwegen, in diesem Fall an den Aspirateur 17, erkennt er die beiden Verzweigungen zum Ventilator nach Reinigung 18 und zum Klappkasten 51. Diese Verzweigungen werden zwischengespeichert, um sie nach Beendigung der Ermittlung des Hauptweges abzuarbeiten. Der Programmprozessor sucht weiter nach einem Weg in die Silozelle 101. Dieser Weg führt weiter über die Waage 22, die Klappkästen 52, 53, den Siloelevator 13 und den Klappkasten 52 zur Silozelle 101.

Wurde der Hauptweg gefunden, werden die Verzweigungen aus dem Zwischenspeicher zurückgeholt. In diesem Fall wird, ausgehend von der Verzweigung, ein End-Punkt gesucht. Für die Verzweigungen am Aspirateur 17 bedeutet dies, daß zunächst der Ventilator 18 und die Austragsschleuse 19 aktiviert werden (erster Sekundärweg), und daß am Frage-Punkt 51 der Bediener gefragt wird, ob der Abputz in dem Abputzbunker 104 oder in den Sack 106 befördert werden soll (zweiter Sekundärweg). Jeder Sekundärweg fängt mit dem Befehl TO und der Antriebsnummer, von der er ausging, an. Bei der Einschaltliste 1 beginnt der erste Sekundärweg mit Schritt 19 und der zweite Sekundärweg mit Schritt 23.

Der Programmprocessor führt ferner eine automatische Mengenbilanzierung vom Startpunkt zum Zielpunkt durch. Dies bedeutet, daß das Gewicht der geförderten Menge vom Gewicht am Startpunkt subtrahiert und zum Gewicht am Zielpunkt addiert wird. Die geförderte Menge wird von der Waage 22 festgestellt, die in der Ablaufliste entsprechend gekennzeichnet ist. Die von der Waage festgestellte Menge wird beim Beenden des Programms von der ursprünglich in der Annahme 100 enthaltenen Menge subtrahiert und zu der in der Silozelle 101 enthaltenen Menge addiert. Wären in den beiden Sekundärwegen weitere Waagen, so würden die bei diesen Waagen festgestellten Mengen jeweils dem nachfolgenden End-Punkt addiert und von der Menge am gemeinsamen Anfangspunkt subtrahiert.

In der Einschaltliste werden auch die Transportzeiten der einzelnen Aggregate und der nachfolgenden Förderwege aufgeführt. Diese Transportzeiten sind in der Ablaufliste angegeben, und sie werden in die Einschaltliste übertragen. Die in der Einschaltliste hinterlegten Transportzeiten werden aufsummiert. Kommt der Programmprocessor zu dem Befehl TO, was bedeutet, daß eine Verzweigung vorliegt, dann werden die Transportzeiten sämtlicher Verzweigungswege ermittelt, und von diesen wird die größte Transportzeit registriert. Die Transportzeit wird benötigt, um beim Abschalten des Transportweges sicherzustellen, daß der gesamte Wege von Restgut leergefahren wird. Dies geschieht bei dem Beispiel gemäß Einschaltliste 1 in der Weise, daß zunächst der Annahmeredler (Schritt 2) ausgeschaltet wird und nach Ablauf der Transportzeit auch die restlichen Antriebe ausgeschaltet werden.

Die nachfolgend angegebene Einschaltliste 2 bezieht sich auf den Fall, daß eine bestimmte Gutmenge von der Silozelle 103 in die Silozelle 101 zu fördern ist.

| Einschaltliste 2 von 103 nach 101 | | | |
|---|---|---|---|
| Schritt | Befehl | Antr.Nr. | Antriebsbezeichnung |
| 1 | VON | 103. | ZELLE |
| 2 | ON | 72. | SILOAUSLAUFSCHIEBER S103 |
| 3 | ON | 21. | SAMMELREDLER |
| 4 | OFF | 55. | KLAPPKASTEN |
| 5 | OFF | 54. | KLAPPKASTEN |
| 6 | | 24. | AUSTRAGSSCHLEUSE ASPIRATION |
| 7 | | 25. | VENTILATOR ASPIRATION |
| 8 | ON | 14. | SILOELEVATOR II |
| 9 | BIN | 20. | DREHROHRVERTEILER |
| 10 | END | 101. | ZELLE |

Bei diesem Ausführungsbeispiel wurde am Frage-Punkt 55 vom Bediener der Befehl OFF gegeben, d.h. der Guttransport soll ohne Reinigung und Wägung erfolgen. Wäre der Befehl ON gegeben worden, dann hätte der Guttransport über den Annahmeelevator 12 und anschließend über die Waage 22 zu einem der Siloelevatoren 13 oder 14 erfolgen können.

Besteht die Aufgabe, eine ganz bestimmte Menge von einer Silozelle in eine andere zu befördern, so muß der Austragschieber der liefernden Zelle genau zu dem Zeitpunkt geschlossen werden, in dem die gewünschte Menge aus dieser Zelle ausgelaufen ist. Dies geschieht dadurch, daß der Transportweg über eine Waage geführt wird. In der Einschaltliste wird das Transportgewicht vom Startpunkt bis zur Waage summiert und dieser Wert wird von dem zu transportierenden Sollgewicht subtrahiert, um das Abschaltgewicht zu ermitteln. Erreicht das von der Waage festgestellte Gewicht das Abschaltgewicht, wird die Gutzufuhr am Startpunkt beendet und der Antrieb über den Förderweg wird noch solange aufrechterhalten, bis sämtliches im Förderweg enthaltene Gut zum Zielpunkt gelangt ist.

**Patentansprüche**

**1.** Verfahren zur Steuerung einer Förder- oder Verarbeitungsanlage, die mehrere durch Förderstrecken miteinander vernetzt verbundene einschaltbare Aggregate aufweist, wobei an Verzweigungsstellen des Netzes umschaltbare Richtungswähler vorgesehen sind, bei welchem eine Einschaltliste erstellt wird und diese Einschaltliste gespeichert und bei Betrieb der Anlage zur Steuerung der Aggregate und Richtungswähler benutzt wird,
**dadurch gekennzeichnet,**

daß die Einschaltliste dadurch erstellt wird,

daß in einen Programmprozessor eine Ablaufliste der Aggregate und Richtungswähler eingegeben wird, in der zu jedem Aggregat und jedem Richtungswähler die an jeden Ausgang angeschlossenen weiteren Aggregate und Richtungswähler als obligatorische oder wählbare Ziele angegeben werden,

daß ein Aggregat als Startpunkt und ein anderes Aggregat als Zielpunkt für die Förderung festgelegt wird,

daß der Programmprozessor, ausgehend von dem Startpunkt, die Aggregate und Richtungswähler entsprechend den in der Ablaufliste angegebenen Folgen in einem Probelauf aneinanderreiht, wobei für die Richtungswähler eine willkürlich vorgebare oder eine vom Bediener beeinflußbare Stellung simuliert wird,

daß bei nachfolgenden Probeläufen jeweils die willkürlich vorgebbaren Stellungen der Richtungswähler verändert werden,

und daß ein Probelauf, der zu dem Zielpunkt führt, als Einschaltliste gespeichert wird.

2. Verfahren nach Anspruch 1, dadurch gekennzeichnet, daß in die Ablaufliste Angaben über die Transportzeit der Förderstrecken und/oder das Transportvolumen der Aggregate eingegeben werden, und daß beim Betrieb der Anlage der Abschaltzeitpunkt unter Berücksichtigung der Summe der Transportzeiten und/oder der Summe der Transportvolumina zwischen Startpunkt und Zielpunkt errechnet wird.

3. Verfahren nach Anspruch 1 oder 2, dadurch gekennzeichnet, daß mindestens eines der Aggregate eine Waage ist, daß nach Beendigung des Betriebes das von der Waage ermittelte Gewicht des durchgelaufenen Gutstroms von dem Gewicht am Startpunkt subtrahiert und zum Gewicht am Zielpunkt addiert wird.

4. Verfahren nach einem der Ansprüche 1-3, dadurch gekennzeichnet, daß bei einem Aggregat (17), bei dem ein Teil des zu fördernden Gutes in mindestens einen Sekundärweg abgezweigt wird, beim Probelauf zunächst der Hauptweg simuliert und im Anschluß an das Finden des Zielpunktes jeder einzelne Sekundärweg bis zum Erreichen eines von mehreren in der Ablaufliste vorgegebenen Endpunkten simuliert wird.

## Claims

1. A process for controlling a conveying or processing system having a plurality of actuatable aggregates connected to each other by conveying paths in the manner of a network, with switchable route selecting means being provided at branch points of the network, a switch-on list being obtained and stored to be used, in operation of the system, for controlling the aggregates and the route selecting means,

   **characterized in**

   that, for obtaining the switch-on list,

   a process list of the aggregates and the route selecting means is input into a program processor, said process list indicating, for each of the aggregates and each of the route selecting means, the successive aggregates and route selecting means connected to each output as obligatory or selectable destinations,

   one aggregate is determined as a starting point and another aggregate is determined as a destination point for the conveying,

the program processor, starting from said starting point and corresponding to the sequences indicated in the process list, lines up the aggregates and route selecting means in a test run, while a position to be set at random or controlled by the operator is being simulated for the route selecting means,

in each of the subsequent test runs, the randomly selectable positions of the route selecting means are changed,

and a test run leading to the destination point is stored as the switch-on list.

2. The process according to claim 1, characterized in that data concerning the transport time period of the conveying paths and/or the transport volume of the aggregates are input into the process list, and that, during operation of the system, the timing of the switching off is calculated on the basis of the sum of the transport time periods and/ or the sum of the transport volumes between the starting point and the destination point.

3. The process according to claim 1 or 2, characterized in that at least one of the aggregates is a weighing means, that, upon termination of operation, the weight of the passed material flow detected by said weighing means is subtracted from the weight at the starting point and is added to the weight at the destination point.

4. The process according to any one of claims 1-3, characterized in that, for an aggregate (17) in which part of the material to be conveyed is branched off into at least one secondary path, the test run is performed while first simulating the main path and, after detection of the destination point, simulating each individual secondary path until reaching one of a plurality of ending points set in the process list.

**Revendications**

1. Méthode de commande d'un système de transport ou de transformation qui présente plusieurs appareillages pouvant être mis en marche, reliés en réseau les uns aux autres par l'intermédiaire de trajets de transport, des sélecteurs de direction commutables étant prévus aux points d'embranchement du réseau, méthode dans laquelle un mode opératoire de mise en marche est établi et ce mode opératoire de mise en marche est mémorisé et utilisé lors du fonctionnement du système pour la commande des appareillages et des sélecteurs de direction, caractérisé en ce que le mode opératoire de mise en marche est établi de façon que

dans un processeur programmé un mode opératoire des appareillages et sélecteurs de direction est entré, dans lequel pour chaque appareillage et pour chaque sélecteur de direction, les autres appareillages et sélecteurs de direction raccordés à chaque sortie sont indiqués en tant que destination obligatoire ou à sélectionner,

un appareillage est déterminé en tant que point de départ et un autre appareillage en tant que point de destination pour le transport,

le processeur programmé, à partir du point de départ, dresse la liste des appareillages et sélecteurs de direction conformément aux successions indiquées dans un mode opératoire d'essai, moyennant quoi pour les sélecteurs de direction une position déterminée arbitrairement ou une position influençable par l'utilisateur est simulée,

pour les modes opératoires d'essai ultérieurs, les positions des sélecteurs de direction à définir arbitrairement sont modifiées,

et qu'un mode opératoire d'essai, qui conduit au point de destination, est mémorisé en tant que mode opératoire de mise en marche.

2. Méthode selon la revendication 1, caractérisée en ce que, dans le mode opératoire, des données concernant le temps de transport des trajets et/ou le volume de transport des appareillages sont entrées, et que lors du fonctionnement du système, l'instant de mise hors service est calculé en prenant en compte la somme des temps de transport et/ou la somme des volumes de transport, entre le point de départ et le point de destination.

3. Méthode selon la revendication 1 ou 2, caractérisée en ce qu'au moins un des appareillages est une balance, qu'après la fin du fonctionnement, le poids de marchandise écoulé, déterminé par la balance, est soustrait du poids au point de départ, et est ajouté au poids au point de destination.

4. Méthode selon l'une des revendications 1 à 3, caractérisée en ce que pour un appareillage (17), où une partie de la marchandise à transporter est déviée dans au moins un trajet secondaire, dans le mode opératoire d'essai, le trajet principal est d'abord simulé, et subséquemment à la détermination du point de destination, chaque trajet secondaire est simulé jusqu'à atteindre l'un de plusieurs points terminaux prédéterminés dans le mode opératoire.

14